# EUROPÄISCHE PATENTANMELDUNG

(11) **EP 4 764 749 A1**
(43) Veröffentlichungstag der Anmeldung: **24.06.2026**
(21) Anmeldenummer: 25223496.8
(22) Anmeldetag: 15.12.2025
(51) Int. Cl.: G05B 19/409

(54) **STEUERUNGSVORRICHTUNG**

(30) Priorität: 17.12.2024 DE 102024138261
(71) Anmelder: Doppstadt Beteiligungs GmbH, 42555 Velbert (DE)
(72) Erfinder: Valentin, Florian, 42549 Velbert (DE); Bödeker, Markus, 45257 Essen (DE); Stock, Christian, 42111 Wuppertal (DE); Bareiter, Jonas, 42105 Wuppertal (DE)
(74) Vertreter: Von Rohr Patentanwälte Partnerschaft mbB

(57) **Zusammenfassung**

Die Erfindung betrifft eine Steuerungsvorrichtung (1) für eine Anlage (2) zur Materialbearbeitung und/oder Materialverarbeitung, insbesondere für Recyclinganwendungen, besonders bevorzugt eine Zerkleinerungs- und/oder Separationsanlage, mit einer Bedieneinrichtung (3), insbesondere zur manuellen Steuerung der Anlage (2), wobei die Bedieneinrichtung (3) ein Bedienfeld (4) aufweisend wenigstens ein Auswahlelement (5) zur manuellen Auswahl wenigstens einer Maschinenkomponente (6) der Anlage (2) und ein Unterbedienfeld (7) aufweisend wenigstens ein Betätigungselement (8) zur Auswahl und/oder Aktivierung und/oder Einstellung wenigstens einer Funktion der ausgewählten wenigstens einen Maschinenkomponente (6) aufweist, wobei das Unterbedienfeld (7) mit dem Bedienfeld (4) derart gekoppelt ist, dass das wenigstens eine Betätigungselement (8) jeweils mit der über das Auswahlelement (5) ausgewählten wenigstens einen Maschinenkomponente (6) gekoppelt ist, insbesondere so dass über das wenigstens eine Betätigungselement (8) je nach ausgewählter wenigstens einer Maschinenkomponente (6) unterschiedliche Funktionen, insbesondere der jeweils ausgewählten wenigstens einen Maschinenkomponente (6), steuerbar sind, und/oder wobei in Abhängigkeit der wenigstens einen über das Auswahlelement (5) ausgewählten Maschinenkomponente (6) das Unterbedienfeld (7) über das wenigstens eine Betätigungselement (8) betätigbar ist, so dass über das wenigstens eine Betätigungselement (8) unterschiedliche ausgewählte Maschinenkomponenten (6) steuerbar sind.

## Beschreibung

Die vorliegende Erfindung betrifft eine Steuerungsvorrichtung für eine Anlage zur Materialbearbeitung und/oder Materialverarbeitung, insbesondere für Recyclinganwendungen, besonders bevorzugt eine Zerkleinerungs- und/oder Separationsanlage, mit einer Bedieneinrichtung, insbesondere zur manuellen Steuerung der Anlage.

Steuerungsvorrichtungen der vorgenannten Art umfassen in der Praxis ein Bedienfeld mit einer Mehrzahl von Bedientasten, mit denen unterschiedliche Maschinenkomponenten der Anlage ausgewählt und gesteuert werden können. Jeder Bedientaste ist dabei eine durchzuführende Funktion der Maschinenkomponente zugeordnet, wie zum Beispiel die Veränderung der Drehzahl eines Walzenkörpers oder das Ausfahren eines Förderbandes. So kann eine Bedientaste zur Erhöhung der Drehzahl des Walzenkörpers und eine weitere Bedientaste zur Reduzierung der Drehzahl des Walzenkörpers vorgesehen sein. Für alle Funktionen, die jeweils von Maschinenkomponenten der Anlage ausgeführt werden, ist immer jeweils ein Bedientaster vorgesehen. Bei einer Vielzahl von möglichen Funktionen ergibt sich ein vergleichsweise großes, unübersichtliches Bedienfeld.

Um ein übersichtlicheres Bedienfeld zu schaffen, ist es auch bekannt, die Funktionen über ein Touchfeld / Touchdisplay zu steuern. Hierbei können nach entsprechender Auswahl der zu steuernden Maschinenkomponenten in dem Touchfeld auf übersichtliche Weise die zu steuernden Funktionen angezeigt werden, ohne für jede Funktion eine eigene Bedientaste vorhalten zu müssen. Das Touchfeld ermöglicht daher eine übersichtliche Darstellung der Funktionen.

Nachteilig an dem aus der Praxis bekannten Touchfeldern ist, dass diese eine komplizierte bzw. verschachtelte Bedienarchitektur haben und nicht selbsterklärend sind. Insbesondere kann ungeschultes Personal eine Vielzahl von Bedienfehlern bei der Benutzung des Touchfeldes machen. Außerdem benötigt die Darstellung elektrische Energie und ein intaktes Anzeigefeld. Die - oft raue -Einsatzumgebung der Anlagen führt häufig zur Beschädigung des Touchfeldes, so dass die Anlage nicht mehr gesteuert werden kann. Außerdem benötigt ein Touchfeld die Interaktion mit der Hand eines Benutzers. In der Praxis ist es jedoch aus Gründen der Arbeitssicherheit erforderlich, dass das Bedienpersonal Handschuhe zum Schutz der Hände trägt. Mit Handschuhen kann jedoch nur schwer ein handelsübliches Touchfeld sicher und exakt bedient werden. Folglich kann während des Betriebes keine Steuerung der Anlage über das Touchdisplay / Touchfeld erfolgen. Zudem ist die Wartung und der Austausch von Touchfeldern kostenintensiv und aufwendig.

Aufgabe der vorliegenden Erfindung ist es, die vorgenannten Nachteile des Standes der Technik zu vermeiden oder aber zumindest im Wesentlichen zu reduzieren.

Die vorgenannte Aufgabe wird durch eine Steuerungsvorrichtung nach Anspruch 1 gelöst. Bevorzugte Weiterbildungen sind Gegenstand der Unteransprüche.

Die erfindungsgemäße Steuerungsvorrichtung ist für eine Anlage zur Materialbearbeitung und/oder Materialverarbeitung, insbesondere für Recyclinganwendungen, vorgesehen. Insbesondere ist die Anlage als eine Zerkleinerungs- und/oder Separationsanlage ausgebildet.

Die Steuerungsvorrichtung kann als Bestandteil der Anlage ausgebildet und/oder an der Anlage angeordnet bzw. gelagert oder der Anlage zugeordnet sein. Insbesondere ist die Steuerungsvorrichtung zur Steuerung der Anlage ausgebildet.

Zudem umfasst die erfindungsgemäße Steuerungsvorrichtung eine Bedieneinrichtung, insbesondere zur manuellen Steuerung der Anlage. Die Bedieneinrichtung kann insbesondere von Bedienpersonal manuell bedient werden.

Erfindungsgemäß weist die Bedieneinrichtung ein Bedienfeld aufweisend wenigstens ein Auswahlelement zur manuellen Auswahl wenigstens einer Maschinenkomponente der Anlage und ein Unterbedienfeld aufweisend wenigstens ein Betätigungselement zur Auswahl und/oder Aktivierung und/oder Einstellung wenigstens einer Funktion der ausgewählten wenigstens einen Maschinenkomponente auf. Die Bedieneinrichtung ist dabei insbesondere in das Bedienfeld und das Unterbedienfeld unterteilt. Durch die gezielte Auswahl von Maschinenkomponenten über die Auswahlelemente kann eine gezielte Ansteuerung erfolgen, wenn dies insbesondere durch die Betriebssituation angezeigt ist.

Gemäß einer ersten erfindungsgemäßen Alternative ist vorgesehen, dass das Unterbedienfeld mit dem Bedienfeld derart gekoppelt ist, dass das wenigstens eine Betätigungselement jeweils mit der über das Auswahlelement ausgewählten wenigstens einen Maschinenkomponente gekoppelt ist, insbesondere so dass über das wenigstens eine Betätigungselement je nach ausgewählter wenigstens einer Maschinenkomponente unterschiedliche Funktionen, insbesondere der jeweils ausgewählten wenigstens einen Maschinenkomponente, steuerbar sind.

Durch die erste erfindungsgemäße Alternative kann ein Betätigungselement mit unterschiedlichen ausgewählten Auswahlelementen gekoppelt werden und folglich in Abhängigkeit des jeweils ausgewählten Auswahlelementes zur Initiierung und/oder Vorgabe unterschiedlicher Funktionen dienen. Auf diese Weise gelingt eine "Mehrfachzuordnung" für die Betätigungselemente, so dass insbesondere eine übersichtliche Oberfläche der Bedieneinrichtung erreicht werden kann. Insbesondere ist es durch die Kopplung zwischen Auswahlelement und Betätigungselement nicht mehr erforderlich, dass für jede durchzuführende Funktion einer Maschinenkomponente ein eigenes Betätigungselement vorgehalten werden muss. Dies reduziert drastisch die Anzahl der Auswahlelemente und Betätigungselemente und führt zu einer vereinfachten und verbesserten Bedienung der Bedieneinrichtung.

Bei einer zweiten erfindungsgemäßen Alternative, die auch gemeinsam mit der ersten erfindungsgemäßen Alternative oder unabhängig von der ersten erfindungsgemäßen Alternative realisiert werden kann, ist vorgesehen, dass in Abhängigkeit der wenigstens einen über das Auswahlelement ausgewählten Maschinenkomponente das Unterbedienfeld über das wenigstens eine Betätigungselement betätigbar ist, so dass über das wenigstens eine Betätigungselement unterschiedliche ausgewählte Maschinenkomponenten steuerbar sind.

Auch die zweite erfindungsgemäße Alternative stellt klar, dass das Unterbedienfeld mit zu dem Bedienfeld gekoppelt ist und auf diese Weise eine "Mehrfachzuordnung" für die Betätigungselemente realisiert werden kann. Folglich ermöglicht auch die zweite erfindungsgemäße Alternative eine übersichtliche und einfach zu bedienende Bedienoberfläche der Bedieneinrichtung. Das Betätigungselement kann folglich in Abhängigkeit des jeweils ausgewählten Auswahlelementes unterschiedliche Maschinenkomponenten ansteuern. Wenn mit dem Auswahlelement beispielsweise eine Walze ausgewählt wird, kann über das Betätigungselement zum Beispiel die Drehgeschwindigkeit der Walze geändert werden. Dasselbe Betätigungselement kann bei einer anderen, über ein anderes Auswahlelement ausgewählten Maschinenkomponente, wie zum Beispiel einem Förderband, auch zur Einstellung bzw. Initiierung von Funktionen der Maschinenkomponente dienen, zum Beispiel die Fördergeschwindigkeit des Förderbandes.

Die nachfolgend angeführten Vorteile und bevorzugten Ausführungsformen gelten in gleicher Weise für die erste und die zweite erfindungsgemäße Alternative.

Vorteilhafterweise können durch das Bedienfeld und das Unterbedienfeld Funktionsfelder der Bedieneinrichtung bereitgestellt werden, die insbesondere dauerhaft dem Benutzer zur Verfügung gestellt werden und insbesondere nicht erst über Betätigung eines Touchfeldes oder dergleichen aufgerufen werden müssen. Vorzugsweise kann auch eine Bedienung der Bedieneinrichtung mit Handschuhen ermöglicht werden, da eine notwendige unmittelbare Interkation mit einem Touchfeld vermieden werden kann. Die Bedienung ist somit durch die erfindungsgemäße Bedieneinrichtung sicherer und besser. Die Arbeitssicherheit für das Bedienpersonal kann folglich sicher eingehalten werden. Gleichzeitig besteht durch die Verknüpfung bzw. die Kopplung zwischen dem Unterbedienfeld und dem Bedienfeld ein geringerer Platzbedarf und es kann so die Komplexität der Bedieneinrichtung reduziert werden. Folglich kann auch eher ungeschultes Bedienpersonal sicher die Anlage betätigen, insbesondere ohne eine spezielle Einweisung in eine komplizierte Bedienarchitektur der Bedieneinrichtung erhalten zu müssen.

Besonders bevorzugt ist das Unterbedienfeld und das Bedienfeld jeweils als nichtelektronisches Funktionsfeld ausgebildet. Dabei kann vorgesehen sein, dass die Bedieneinrichtung mit elektrischer Spannung versorgt wird. Diese Spannung kann beispielsweise für ergänzende Anzeigeeinrichtungen, Anzeigedisplays, Leuchteinrichtungen etc. genutzt werden, die zur weiteren vereinfachten Bedienung der Bedieneinrichtung beitragen können.

Insbesondere kann das Unterbedienfeld zumindest abschnittsweise lokal vom Bedienfeld entkoppelt und bevorzugt dauerhaft sichtbar und/oder nicht-displaybasiert und/oder nicht-digital ausgebildet sein. Auf diese Weise kann auch optisch eine Trennung zwischen Bedienfeld und Unterbedienfeld erreicht werden, was ebenfalls zur weiteren Vereinfachung der Bedienung beiträgt. Für die Bedienperson ist somit insbesondere auf den ersten Blick offensichtlich, dass zuerst das Auswahlelement des Bedienfeldes und dann das Betätigungselement des Unterbedienfeldes betätigt werden muss, um eine bestimmte Steuerung bzw. Durchführung wenigstens einer Funktion wenigstens einer Maschinenkomponente zu erreichen. Fehlbedienungen können so vermieden werden, wodurch ein effizienter und langfristiger Einsatz der Anlage gewährleistet werden kann.

Bedarfsweise kann eine einen Bildschirm bzw. ein Display aufweisende Anzeigeeinrichtung der Bedieneinrichtung unterstützend eingesetzt werden, wie nachfolgend noch beschrieben werden wird. Über die Anzeigeeinrichtung erfolgt dann aber insbesondere keine Steuerung der Maschinenkomponenten. Dies erfolgt bevorzugt über die Kopplung zwischen Bedienfeld und Unterbedienfeld, wobei die Anzeigeeinrichtung visuell die Bedienung unterstützen und/oder visualisieren kann, um insbesondere die Betätigung der Bedieneinrichtung weiter zu vereinfachen. Insbesondere erfolgt an der Anzeigeeinrichtung selbst keine Eingabe bzw. keine Interaktion zur Steuerung der Anlage.

Bei einer weiteren bevorzugten Ausführungsform ist vorgesehen, dass das Unterbedienfeld mehrere Betätigungselemente aufweist, die insbesondere derart ausgebildet sind, dass in Abhängigkeit der über das Auswahlelement ausgewählten Maschinenkomponente unterschiedliche Funktionen der ausgewählten Maschinenkomponenten aktiviert, ausgewählt und/oder eingestellt werden. Folglich können unterschiedliche Funktionen und/oder eine Funktion auf unterschiedliche Weise durch die mehreren Betätigungselemente für die wenigstens eine durch das Auswahlelement vorgewählte Maschinenkomponente vorgegeben werden.

Insbesondere ist es alternativ oder zusätzlich auch möglich, dass wenigstens ein Betätigungselement derart ausgebildet ist, dass über das Betätigungselement eine weitere Einstellung der auszuführenden Funktion der wenigstens einen Maschinenkomponente erfolgen kann. Hierzu kann das Betätigungselement mehrfach, zum Beispiel in unterschiedliche Richtungen etc., betätigt werden.

Durch mehrere Betätigungselemente gelingt jedoch eine einfache Auswahl der gewünschten auszuführenden Funktion - insbesondere ohne ein spezielles Geschick bei der Betätigung des Betätigungselementes. Besonders bevorzugt ist es zur Betätigung des Betätigungselementes nur erforderlich, dieses umzulegen und/oder zu drücken.

Insbesondere sind zwischen 2 und 10 Betätigungselemente, insbesondere zwischen 2 und 5 Betätigungselemente, vorgesehen. Auf diese Weise können durch die mehreren Betätigungselemente zwar die Funktionen der jeweils ausgewählten wenigstens einen Maschinenkomponente variiert bzw. unterschiedliche Funktionen einem Benutzer angeboten werden. Jedoch ist keine zu große Varianz in den auszuwählenden Funktionen vorhanden, so dass weiterhin eine einfache Steuerung der Anlage erfolgen kann. Insbesondere weist daher das Unterbedienfeld nur zwischen 2 und 10, bevorzugt zwischen 2 und 5, Betätigungselemente auf.

Die Anzahl der Auswahlelemente des Bedienfeldes kann von der jeweiligen Anlage abhängen. Es gibt Anlagen im Recyclingbereich, die eine Vielzahl von während des Betriebes zu steuernden Maschinenkomponenten aufweisen. Andere Anlagen benötigen eine weniger komplizierte Auswahl der Maschinenkomponenten, wobei bei diesen Anlagen insbesondere auch eine Bündelung und/oder Zusammenfassung von mehreren Maschinenkomponenten sinnvoll sein kann, die zusammen über ein Auswahlelement ausgewählt werden können.

Vorzugsweise können zwischen 2 bis 100, bevorzugt zwischen 2 bis 50, weiter bevorzugt zwischen 3 bis 20, Auswahlelemente des Bedienfeldes vorhanden sein. Über ein Auswahlelement kann eine oder können mehrere Maschinenkomponenten der Anlage ausgewählt werden.

Ferner kann das Auswahlelement insbesondere durch Drücken und/oder Umlegen betätigt werden. Auf diese Weise kann eine einfache Betätigung des Auswahlelementes erfolgen, die insbesondere auch mit einer einen Handschuh tragenden Hand der Bedienperson einfach betätigt werden kann.

Bei einer weiteren bevorzugten Ausgestaltung des vorliegenden Erfindungsgedankens ist vorgesehen, dass eine Funktion der wenigstens einen Maschinenkomponente eine veränderte Anordnung und/oder Positionierung der Maschinenkomponente in der Anlage und/oder eine veränderte Betriebsweise, insbesondere wenigstens eines veränderten Betriebsparameters, der wenigstens einen Maschinenkomponente bedingt. Somit kann insbesondere sowohl die Position der Maschinenkomponente als auch bedarfsweise die Betriebsweise der Maschinenkomponente durch die jeweilige Funktion verändert werden.

Zur Einstellung der Position können insbesondere Grenzwerte festgelegt werden und über das Betätigungselement kann eine tastende Bewegung der wenigstens einen Maschinenkomponente ermöglicht werden. Alternativ oder zusätzlich kann auch eine jeweils vorgegebene Bewegung der wenigstens einen Maschinenkomponente durch die Betätigung des Betätigungselementes initiiert werden. Diese Bewegung kann auch durch die Grenzwerte für die Position der Maschinenkomponente beschränkt oder gestoppt werden.

Zudem kann auch die Betriebsweise über eine tastende Betätigung des Betätigungselementes schrittweise verändert werden, insbesondere über die schrittweise Erhöhung oder Senkung eines Betriebsparameters. Es versteht sich, dass auch hier Grenzwerte für die jeweilige Betriebsweise und/oder den jeweiligen Betriebsparameter festgelegt werden können. Diese Grenzwerte können auch zur Beschränkung und/oder zur Begrenzung der einzustellenden Werte eines Betriebsparameters dienen.

Insbesondere kann eine Funktion eine Bewegungsfunktion zum Bewegen einer ausgewählten Maschinenkomponente sein. Bevorzugt ist die Bewegungsfunktion über die Betätigungselemente in zwei einander entgegengesetzte Bewegungsrichtungen der Bewegungsfunktion betätigbar. Weiter bevorzugt kann jeder Bewegungsrichtung ein Betätigungselement zugeordnet sein. Durch die auszuführende Bewegungsfunktion kann insbesondere die Anordnung und/oder die Position der wenigstens einen Maschinenkomponente in der Anlage verändert werden.

Darüber hinaus kann wenigstens eine Funktion eine lineare, vorzugsweise eine horizontale oder vertikale, Bewegungsfunktion und/oder wenigstens eine andere Funktion eine zumindest abschnittsweise rotatorische und/oder drehgelagerte Bewegungsfunktion sein. Für eine ausgewählte Maschinenkomponente können auch mehrere Bewegungsfunktionen durch die Betätigung des jeweiligen Betätigungselementes ausgeführt werden. So kann insbesondere zunächst eine lineare Bewegungsfunktion und anschließend eine rotatorische Bewegungsfunktion oder vice versa durchgeführt werden.

Ferner ist bei einer weiteren bevorzugten Ausführungsform vorgesehen, dass die Bedieneinrichtung, insbesondere die Steuerungsvorrichtung, an der Anlage, insbesondere an einer Gehäuseoberfläche der Anlage, und/oder benachbart zu der Anlage, bevorzugt angeordnet an ein mit der Anlage verbundenes Haltesystem zur Halterung der Steuerungsvorrichtung, angeordnet ist. Durch die Anordnung an der Anlage kann gewährleistet werden, dass die Anlage stets über die Bedieneinrichtung entsprechend gesteuert und bedient werden kann. Das Bedienpersonal kann auf diese Weise auch die Umsetzung der ausgewählten Funktionen überwachen und, wenn es erforderlich sein sollte, insbesondere zeitnah in den Betrieb der Anlage eingreifen.

Alternativ oder zusätzlich kann die Bedieneinrichtung, insbesondere die Steuerungsvorrichtung, als Fernbedienung für die Anlage und/oder als von der Anlage räumlich getrennte und mit der Anlage, bevorzugt über eine Funkverbindung, WLAN-Verbindung und/oder Bluetooth-Verbindung, insbesondere kabellos, gekoppelte Einrichtung ausgebildet sein. Demnach kann bedarfsweise auch eine Steuerung der Anlage ermöglicht werden, wenn das Bedienpersonal insbesondere nicht unmittelbar neben der Anlage steht. Dies ermöglicht eine Erhöhung der Flexibilität des Einsatzes der Anlage, aber auch eine Erhöhung der Arbeitssicherheit für das Bedienpersonal.

Vorzugsweise ist weiter vorgesehen, dass das Bedienfeld und/oder das Unterbedienfeld frei von einem Bedienbildschirm und/oder einem Touchscreen ist und/oder durch physische, manuelle Betätigung des Auswahlelementes bzw. des Betätigungselementes, bevorzugt tasterbasiert, betätigbar ist. Dies ermöglicht eine einfache Bedienung auch beim Tragen von Sicherheitskleidung, die die Bedienung eines Touchscreens deutlich erschwert. Auch kann die Komplexität der Bedienung reduziert werden. Anders als im Stand der Technik ist kein Verständnis einer komplizierten Bedienarchitektur zur Bedienung der Bedieneinrichtung erforderlich.

Weiterhin kann bei einer weiteren vorteilhaften Ausgestaltung der vorliegenden Erfindung vorgesehen sein, dass die Gehäuseoberfläche im Bereich des Bedienfeldes und/oder des Unterbedienfeldes und/oder der Bereich des Bedienfeldes und/oder der Bereich des Unterbedienfeldes frei von einem optischen und elektrischen Anzeigemittel, insbesondere bildschirm- und/oder displayfrei, ausgebildet ist/sind. Es versteht sich, dass in einem anderen Bereich bedarfsweise ein Display bzw. Bildschirm vorgesehen sein kann, insbesondere jedenfalls nicht im Bereich des Bedienfeldes und des Unterbedienfeldes, die eine einfache manuelle Betätigung ermöglichen.

Demnach kann wenigstens ein, insbesondere alle, Auswahlelement und/oder wenigstens ein, insbesondere alle, Betätigungselement tastenförmig bzw. als Auswahltaste ausgebildet sein. Alternativ oder zusätzlich kann vorgesehen sein, dass das Auswahlelement und/oder das Betätigungselement identisch zueinander ausgebildet sind. Somit kann das Bedienpersonal das Auswahlelement und das Betätigungselement insbesondere auf die gleiche Weise, beispielsweise durch Drücken, betätigen. Dies trägt ebenfalls weiter zur vereinfachten Bedienung bei.

Besonders bevorzugt ist das Auswahlelement und/oder das Betätigungselement als überstehender Taster und/oder Druckknopf und/oder Drucktaster und/oder Kippschalter und/oder Steuerungsrad und/oder Steuerhebel, insbesondere Joystick, ausgebildet. Die vorgenannten Ausbildungen ermöglichen eine einfache Betätigung.

Die Ausbildung als Taster, Druckknopf, Kippschalter und/oder Drucktaster kann eine einfache Auswahl ermöglichen, insbesondere eine binäre Auswahl - wie zum Beispiel "Ein" oder "Aus". Dies bietet sich insbesondere dann an, wenn das Bedienpersonal keinen Einfluss auf die Art und Weise, wie eine vorgegebene Funktion ausgeführt werden soll, nehmen soll. Dies trägt zur Reduzierung der Bedienfehler bei. Es ist aber auch möglich, dass mit dieser Ausbildung zum Beispiel durch die Dauer der Betätigung, zum Beispiel die Dauer des Drückens, oder die Häufigkeit einer Betätigung, wie zum Beispiel ein dreimaliges Drücken, ein Einfluss auf die Durchführung der Funktion genommen werden kann. Dies kann insbesondere optional ermöglicht werden.

Zudem bietet die Ausbildung des Auswahlelementes und/oder des Betätigungselementes als Steuerungsrad und/oder Steuerhebel, insbesondere Joystick, die Möglichkeit, dass mehr als eine binäre Auswahl erfolgen kann. Folglich können auf diese Weise durch ein Auswahlelement unterschiedliche Maschinenkomponenten oder Zusammenschlüsse von Maschinenkomponenten ausgewählt und/oder unterschiedliche Funktionen und/oder unterschiedliche Ausführungen einer Funktion vorgegeben werden. Auf diese Weise kann eine kompakte Ausgestaltung der Bedieneinrichtung ermöglicht werden, insbesondere wobei die Anzahl der Betätigungselemente und/oder Auswahlelemente reduziert werden kann.

Des Weiteren ist bei einer weiteren bevorzugten Ausführungsform vorgesehen, dass auf dem Bedienfeld Visualisierungsmittel, insbesondere graphische Visualisierungsmittel, zur Kennzeichnung der über das jeweilige Auswahlelement auswählbaren wenigstens einen Maschinenkomponente(n) vorgesehen sind. Die Visualisierungsmittel ermöglichen eine einfache Zuordnung des jeweiligen Auswahlelementes zu der über dieses Auswahlelement auszuwählenden Maschinenkomponente. Zum Beispiel können die Visualisierungsmittel über Piktogramme auf klare, einfach verständliche Art die jeweiligen Maschinenkomponenten referenzieren. Hierfür ist es vorteilhaft, wenn die Visualisierungsmittel den Auswahlelementen räumlich zugeordnet sind, insbesondere benachbart zu den Auswahlelementen angeordnet sind.

Vorzugsweise können die Visualisierungsmittel zur Kennzeichnung der Maschinenkomponente dauerhaft und/oder nicht-elektronisch, insbesondere als Markierungen, bevorzugt Symbolmarkierungen und/oder Gravierungen, bevorzugt auf dem Gehäuse der Bedieneinrichtung, ausgebildet sein. Die Symbolmarkierungen können die zuvor beschriebenen Piktogramme und/oder Icons sein.

Bei einer weiteren bevorzugten Ausführungsform ist vorgesehen, dass auf dem Bedienfeld weitere Visualisierungsmittel, insbesondere graphische Visualisierungsmittel, zur Kennzeichnung der über das jeweilige Betätigungselement auswählbaren Funktion der wenigstens einen Maschinenkomponente(n) vorgesehen sind. Insbesondere können die weiteren Visualisierungsmittel zur Kennzeichnung der Funktionen dauerhaft und/oder nicht-elektronisch, insbesondere als Markierungen, bevorzugt Symbolmarkierungen und/oder Gravierungen, ausgebildet sein. Die weiteren Visualisierungsmittel können ebenfalls als Piktogramme und/oder Icons dargestellt sein. Bevorzugt sind die weiteren Visualisierungsmittel dem jeweiligen Auswahlelement räumlich zugeordnet, insbesondere benachbart zu dem Auswahlelement angeordnet. Bevorzugt kann das weitere Visualisierungsmittel eine Symbolgrafik, wie ein Pfeil oder ähnliches, aufweisen, dass diese dargestellte Funktion zu einem bestimmten Betätigungselement verknüpft, wenn mehrere Betätigungselemente vorhanden sind. Diese Symbolgrafik kann dann auch dem jeweiligen Betätigungselement zugeordnet und insbesondere auf dem Betätigungselement oder benachbart zu diesem am Gehäuse der Bedieneinrichtung angeordnet und/oder graphisch dargestellt sein.

Zum Beispiel kann durch das weitere Visualisierungsmittel verdeutlicht werden, welche Funktionen für die jeweilige Maschinenkomponente durch Auswahl der Betätigungselemente ausgeführt werden können. Diese Funktionen können dann mit einer Symbolgrafik verknüpft sein, die diese Funktion einem Betätigungselement zuordnet. Bedarfsweise lässt sich diese Symbolgrafik, ggf. in abgeänderter Form, auch an dem oder neben dem Betätigungselement "wiederfinden". Hierdurch kann eine einfach verständliche Darstellung der auszuwählenden Optionen über die Bedieneinrichtung ermöglicht werden.

Vorteilhafterweise kann das Unterbedienfeld zumindest abschnittsweise lokal vom Bedienfeld unabhängig und/oder räumlich getrennt, insbesondere benachbart zum Bedienfeld, auf einer gemeinsamen Gehäuseoberfläche der Anlage angeordnet sein. Auf diese Weise kann der Benutzer zweifelsfrei das Bedienfeld vom Unterbedienfeld unterscheiden und insbesondere fehlerfrei die Bedieneinrichtung betätigen, insbesondere auch ohne vertiefte Vorkenntnisse zur Bedienung.

Bei einer weiteren bevorzugten Ausgestaltung der Steuerungsvorrichtung ist wenigstens eine Funktion in Abhängigkeit zur Dauer der Betätigung des Betätigungselements in eine rastende Funktionsstellung oder in eine tastende Funktionsstellung überführbar. So kann ein Grenzwert der Betätigungsdauer, insbesondere zwischen 0,3 bis 5 Sekunden, bevorzugt zwischen 0,5 bis 2 Sekunden, den Wechsel von der rastenden in die tastende Funktion ermöglichen. Hierdurch kann mit dem Betätigungselement eine einfache, umfassende Betätigung ermöglicht werden. Insbesondere kann die Funktion in der rastenden Funktionsstellung auch nach Beendigung der Betätigung des Betätigungselements aktiviert bleiben und/oder die Funktion kann in der tastenden Funktionsstellung nach Beendigung der Betätigung des Betätigungselements gestoppt werden. Bevorzugt ist demnach ein Betätigungselement in Abhängigkeit der Dauer der Betätigung sowohl in eine rastende als auch in eine tastende Funktionsstellung überführbar. Dies ermöglicht eine Anpassung der Bedieneinrichtung an unterschiedliche Vorgaben der Komplexität der Bedienung und bevorzugt eine Flexibilität der Bedieneinrichtung.

Wie zuvor bereits ausgeführt worden ist, ist bei einer weiteren bevorzugten Ausführungsform vorgesehen, dass, insbesondere auf der Gehäuseoberfläche, wenigstens eine Anzeigeeinrichtung der Bedieneinrichtung vorgesehen ist. Vorzugsweise ist die Anzeigeeinrichtung lokal entkoppelt vom Bedienfeld und/oder vom Unterbedienfeld. Alternativ oder zusätzlich kann insbesondere vorgesehen sein, dass in Abhängigkeit der über das Auswahlelement ausgewählten wenigstens einen Maschinenkomponente eine der über die Betätigungselement(e) auswählbaren und/oder ausgewählten Funktion zugeordnete graphische Funktionsdarstellung auf der Anzeigeneinrichtung erfolgt. Die Anzeigeeinrichtung kann somit neben den Visualisierungsmitteln und den weiteren Visualisierungsmitteln zur graphischen Darstellung der auszuwählenden Funktionen dienen und folglich die Bedienung unterstützen und vereinfachen. Besonders bevorzugt verknüpft die Anzeigeeinrichtung die über die Betätigungselement(e) steuerbaren Funktionen graphisch mit dem jeweiligen Betätigungselement.

Ferner ist bei einer bevorzugten Ausgestaltung des Erfindungsgedankens vorgesehen, dass ein Signalmittel, insbesondere Leuchtmittel und/oder insbesondere ausgebildet zur optischen, akustischen und/oder taktilen Signalgebung, dem Auswahlelement derart zugeordnet ist, dass infolge der Auswahl über das Auswahlelement eine, insbesondere optische, akustische und/oder taktile, Hervorhebung im Bereich des Auswahlelements, insbesondere gegenüber den übrigen Auswahlelementen, und/oder eine Aktivierung des Signalmittels erfolgt. Die Signalmittel können demnach dem Bedienpersonal auf schnell erkennbare Weise anzeigen, welches Auswahlelement ausgewählt worden ist. Für den Fall, dass eine unbeabsichtigte Auswahl erfolgt ist, wird dann die Möglichkeit geschaffen, schnell eine Korrektur veranlassen zu können und/oder es wird überhaupt keine Funktion über ein Betätigungselement ausgewählt, da für das Bedienpersonal schnell erkennbar ist, ob über das Auswahlelement die richtigen Maschinenkomponenten ausgewählt worden sind.

In diesem Zusammenhang kann weiter bevorzugt vorgesehen sein, dass wenigstens ein weiteres Signalmittel, insbesondere ein weiteres Leuchtmittel und/oder insbesondere ausgebildet zur optischen, akustischen und/oder taktilen Signalgebung, dem Unterbedienfeld derart zugeordnet ist, dass infolge der Auswahl über das Auswahlelement wenigstens eine, insbesondere optische, akustische und/oder taktile, Hervorhebung eines Bereiches des Unterbedienfeldes und/oder eine Aktivierung des weiteren Signalmittels erfolgt, vorzugsweise im Bereich des/der Betätigungselements/Betätigungselemente zur Auswahl der Funktion. Auf diese Weise kann dem Benutzer angezeigt werden, mit welchen Betätigungselementen eine Betätigung möglich ist und/oder welches Betätigungselement entsprechend ausgewählt worden ist.

Besonders bevorzugt kann vorgesehen sein, dass das Signalmittel und/oder das weitere Signalmittel unterschiedliche Zustände einnehmen kann. So kann zumindest das Signalmittel in einem ersten Zustand verdeutlichen, dass das Auswahlelement angewählt bzw. ausgewählt werden könnte, zum Beispiel durch Wiedergabe von insbesondere weißem Licht. Wenn das Auswahlelement angewählt worden ist, kann ein zweiter Zustand eingenommen werden, der sich optisch vom ersten Zustand unterscheiden kann - zum Beispiel durch Wechsel in eine andere, beispielsweise grüne Farbe. Im zweiten Zustand kann über die Betätigung der Betätigungselemente eine Funktion für die über das Auswahlelement ausgewählte wenigstens eine Maschinenkomponente erfolgen. Wenn die entsprechende Funktion ausgeführt wird, kann das Signalmittel in einen dritten Zustand überführt werden, in dem es in einer weiteren Farbe, zum Beispiel rot, leuchtet. In diesem Zustand kann das Signalmittel so lange verbleiben, wie die jeweilige Funktion ausgeführt wird. Bedarfsweise kann dann bereits das nächste Auswahlelement ausgewählt und eine Funktion der ausgewählten Maschinenkomponente initiiert werden, obwohl eine andere Maschinenkomponente weiterhin eine Funktion ausführt und daher weiterhin das dieser Maschinenkomponente zugeordnete Signalmittel im dritten Zustand sein kann. Folglich können zeitgleich verschiedene Signalmittel des Bedienfeldes in unterschiedlichen Zuständen sein und so verdeutlichen, dass nacheinander unterschiedliche Maschinenkomponenten der Anlage angesteuert werden können. Durch die unterschiedlichen Zustände wird zudem sichtbar, für welche über das jeweilige Auswahlelement ausgewählte Maschinenkomponente in dem Moment die Steuerung durch Betätigung der Betätigungselemente vorgegeben wird.

Darüber hinaus betrifft die vorliegende Erfindung eine Anlage zur Materialbearbeitung und/oder Materialverarbeitung, insbesondere für Recyclinganwendungen, besonders bevorzugt eine Zerkleinerungs- und/oder Separationsanlage, mit einer nach einem der vorgenannten Ausführungsformen ausgebildeten Steuerungsvorrichtung.

Im Hinblick auf Vorteile und bevorzugte Ausführungsformen der Anlage darf auf die vorstehenden Ausführungen vollumfänglich verwiesen werden, das in gleicher Weise auch für die Anlage gilt. Zur Vermeidung von unnötigen Wiederholungen wird daher auf eine erneute Wiedergabe verzichtet.

Schließlich betrifft die vorliegende Erfindung noch eine Verwendung einer nach einem der vorgenannten Ausführungsformen ausgebildete Steuerungsvorrichtung in einer Anlage zur Materialbearbeitung und/oder Materialverarbeitung, insbesondere für Recyclinganwendungen, besonders bevorzugt eine Zerkleinerungs- und/oder Separationsanlage.

Im Hinblick auf Vorteile und bevorzugte Ausführungsformen der Verwendung darf auf die Ausführungen zur Steuerungsvorrichtung und/oder zur Anlage verwiesen werden, die in gleicher Weise auch für die Verwendung gelten. Zur Vermeidung von unnötigen Wiederholungen wird daher auf eine erneute Wiedergabe verzichtet.

Des Weiteren wird ausdrücklich darauf hingewiesen, dass alle vorgenannten und nachstehenden Intervalle sämtliche darin enthaltene Zwischenintervalle und auch Einzelwerte enthalten und diese Zwischenintervalle und Einzelwerte als erfindungswesentlich anzusehen sind, auch wenn diese Zwischenintervalle oder Einzelwerte im Einzelnen nicht konkret angegeben sind.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen oder deren Rückbeziehung.

Es zeigt:
- Fig. 1: eine schematische Darstellung einer erfindungsgemäßen Steuerungsvorrichtung,
- Fig. 2: eine schematische perspektivische Darstellung einer erfindungsgemäßen Anlage,
- Fig. 3: eine schematische perspektivische Darstellung einer weiteren Ausführungsform einer erfindungsgemäßen Anlage,
- Fig. 4: eine schematische perspektivische Darstellung einer weiteren Ausführungsform einer erfindungsgemäßen Anlage,
- Fig. 5: eine schematische Darstellung einer erfindungsgemäßen Bedieneinrichtung und
- Fig. 6: eine schematische Darstellung der Funktionsweise einer erfindungsgemäßen Steuerungsvorrichtung.

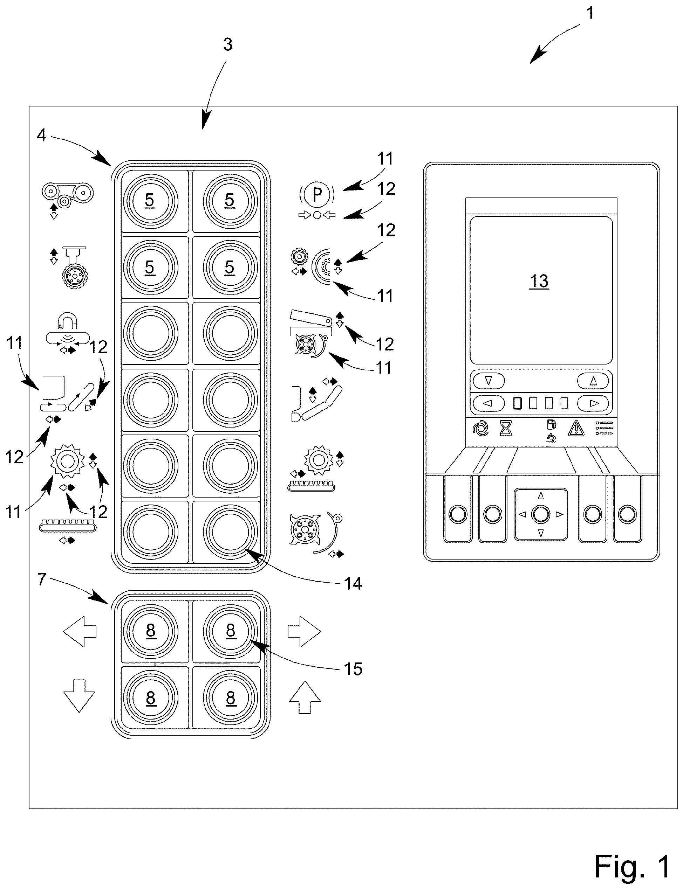

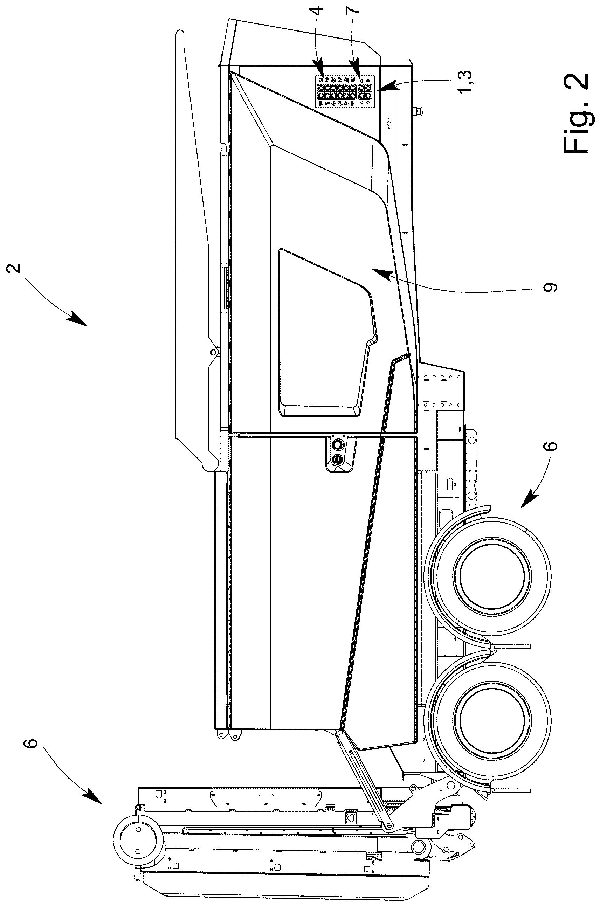

Die Fig. 1 zeigt eine Steuerungsvorrichtung 1 für eine Anlage 2. Die Fig. 1 zeigt nicht, wie die Steuerungsvorrichtung 1 mit der Anlage 2 verbunden ist. Dies ist schematisch zum Beispiel in der Fig. 2 dargestellt.

Die in Fig. 1 dargestellte Steuerungsvorrichtung 1 ist unmittelbar oder mittelbar mit der Anlage 2 verbunden. Zur Kopplung mit der Anlage 2 kann eine drahtgebundene oder drahtlose Verbindung vorgesehen sein.

Nicht näher dargestellt ist, dass auch mehrere Steuerungsvorrichtungen 1 einer Anlage 2 zugeordnet sein können, die jeweils zur Steuerung der Anlage 2 ausgebildet sein können.

So kann in weiteren, nicht näher dargestellten Ausführungsformen vorgesehen sein, dass eine an der Anlage 2 angeordnete Steuerungsvorrichtung 1 und eine weitere drahtlos mit der Anlage 2 gekoppelte Steuerungsvorrichtung 1 vorgesehen sind, wobei die drahtlos mit der Anlage 2 gekoppelte weitere Steuerungsvorrichtung 1 insbesondere extern von der Anlage 2 auf einem Endgerät bereitgestellt werden kann. In diesem Zusammenhang können die Steuerungsvorrichtungen 1 gleich oder unterschiedlich ausgebildet sein, insbesondere kann sich die Bedienoberfläche bedarfsweise unterscheiden. Bevorzugt ist dabei wenigstens eine Steuerungsvorrichtung 1 auf erfindungsgemäße Art und Weise ausgebildet, insbesondere beide Steuerungsvorrichtungen 1.

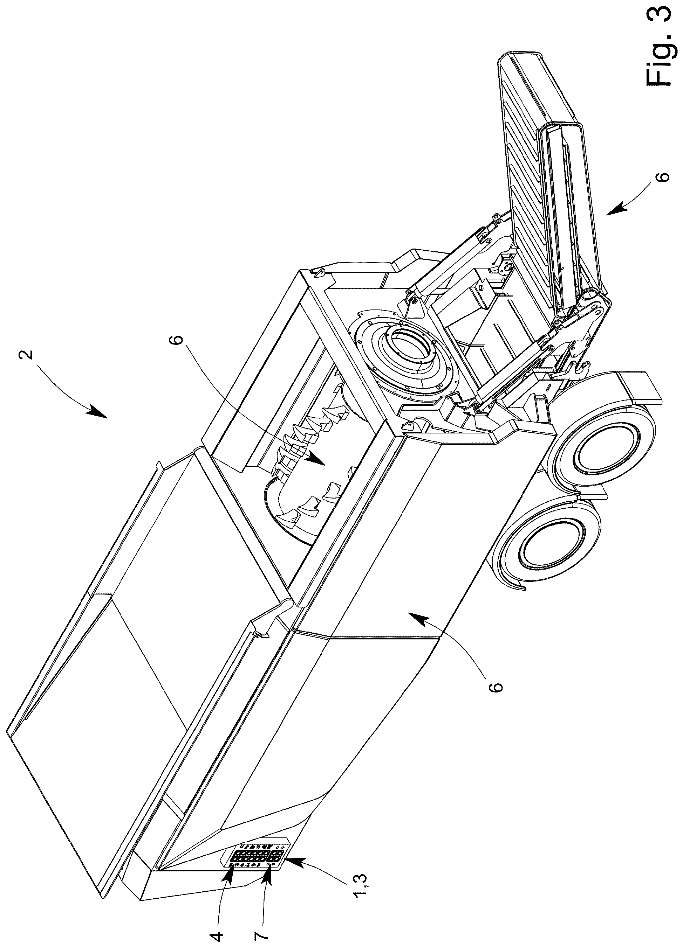

Schematisch sind unterschiedliche Anlagen 2 in den Fig. 2 bis 4 dargestellt. In den in den Fig. 2 bis 4 dargestellten Ausführungsformen ist die Anlage 2 als Zerkleinerungsanlage ausgebildet, die insbesondere eine Zerkleinerungswalze aufweist. In weiteren, nicht näher dargestellten Ausführungsformen kann die Anlage 2 auch keine Zerkleinerungsanlage, sondern eine Separationsanlage oder eine weitere Anlage zur Anwendung im Recyclingbereich sein.

Insbesondere ist die Anlage 2 zur Materialbearbeitung und/oder Materialverarbeitung, insbesondere für Recyclinganwendungen, vorgesehen.

Fig. 1 zeigt weiter, dass die Steuerungsvorrichtung 1 eine Bedieneinrichtung 3, insbesondere zur manuellen Steuerung der Anlage 2, umfasst. In dem in Fig. 2 dargestellten Ausführungsbeispiel ist die Bedieneinrichtung 3 unmittelbar an der Anlage 2 angeordnet. In weiteren Ausführungsformen kann jedoch die Steuerungsvorrichtung 1 und/oder die Bedieneinrichtung 3 von der Anlage 2 räumlich getrennt sein, wie bereits beschrieben, und zur Steuerung der Anlage 2 mit dieser gekoppelt sein, bevorzugt über eine drahtlose Verbindung.

Die Fig. 1 zeigt, dass die Bedieneinrichtung 3 ein Bedienfeld 4 mit wenigstens einen Auswahlelement 5 zur manuellen Auswahl wenigstens einer Maschinenkomponente 6 der Anlage 2 und einem Unterbedienfeld 7 mit wenigstens einem Betätigungselement 8 zur Auswahl und/oder Aktivierung und/oder Einstellung wenigstens einer Funktion der ausgewählten wenigstens einen Maschinenkomponente 6 aufweist.

In dem in Fig. 1 dargestellten Ausführungsbeispiel ist das Unterbedienfeld 7 beabstandet zu dem Bedienfeld 4 und unterhalb des Bedienfeldes 4 angeordnet. Es ist eine optisch klar erkennbare Abtrennung zwischen dem Bedienfeld 4 und dem Unterbedienfeld 7 vorgenommen worden.

Das Auswahlelement 5 ist in dem in Fig. 1 gezeigten Ausführungsbeispiel zumindest im Wesentlichen gleich zu dem Betätigungselement 8 ausgebildet und kann insbesondere auf die gleiche Weise von einer Bedienperson bedient werden. In weiteren, nicht näher dargestellten Ausführungsformen können das Betätigungselement 8 und das Auswahlelement 5 unterschiedlich ausgebildet sein.

In weiteren, nicht näher dargestellten Ausführungsformen können das Unterbedienfeld 7 und das Bedienfeld 4 auch auf andere Weise für die Bedienperson voneinander separiert werden, insbesondere durch eine optisch wahrnehmbare Abtrennung, wie eine Markierung, eine Beabstandung etc., und/oder durch eine entsprechende Hervorhebung, die von einer Bedienperson wahrgenommen werden kann, des Unterbedienfeldes 7 und/oder des Bedienfeldes 4.

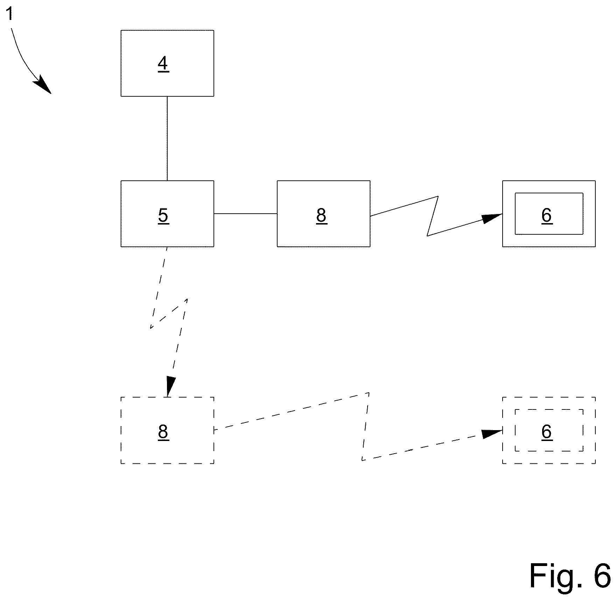

Die Fig. 6 visualisiert die Betriebsweise der Bedieneinrichtung 3 und verdeutlicht, dass in Abhängigkeit der wenigstens einen über das Auswahlelement 5 ausgewählten Maschinenkomponente 6 das Unterbedienfeld 7, das in der Fig. 6 nicht näher dargestellt ist, über das wenigstens eine Betätigungselement 8 betätigbar ist, so dass über das wenigstens eine Betätigungselement 8 unterschiedliche ausgewählte Maschinenkomponenten 6 steuerbar sind. Eine unterschiedliche Ansteuerung mit unterschiedlichen Funktionen ist in der Fig. 6 schematisch durch die gestrichelte Ansicht dargestellt.

Bei der in Fig. 1 dargestellten Ausführungsform ist vorgesehen, dass das Unterbedienfeld 7 mit dem Bedienfeld 4 derart gekoppelt ist, dass das wenigstens eine Betätigungselement 8 jeweils mit der über das Auswahlelement 5 ausgewählten wenigstens einen Maschinenkomponente 6 gekoppelt ist. Bedarfsweise kann ein Auswahlelement 5 auch mit mehreren Maschinenkomponenten 6 gekoppelt sein, wie einige Auswahlelemente 5 in der Fig. 1 dies schematisch zeigen.

Die Kopplung kann dabei derart erfolgen, dass über das wenigstens eine Betätigungselement 8 je nach ausgewählter wenigstens einer Maschinenkomponente 6 unterschiedliche Funktionen, insbesondere der jeweils ausgewählten wenigstens einen Maschinenkomponente 6, steuerbar sind. Für unterschiedliche Maschinenkomponenten 6, die über ein Auswahlelement 5 angesteuert werden können, können auch unterschiedliche Funktionen über die Betätigungselemente 8 vorgegeben werden. Dabei kann für jede Maschinenkomponente 6 wenigstens eine Funktion oder mehrere Funktionen über wenigstens ein Betätigungselement 8 vorgegeben werden. Die entsprechende mögliche Auswahl kann einer Bedienperson auch optisch angezeigt bzw. visualisiert werden, was in der Fig. 1 schematisch dargestellt ist und worauf im Folgenden noch im Detail eingegangen werden wird.

Zudem zeigt die Fig. 1, dass das Unterbedienfeld 7 mehrere Betätigungselemente 8 aufweist. Schematisch ist dargestellt, dass die Betätigungselemente 8 derart ausgebildet sind, dass in Abhängigkeit der über das Auswahlelement 5 ausgewählten Maschinenkomponente 6 unterschiedliche Funktionen der ausgewählten Maschinenkomponenten 6 aktiviert, ausgewählt und/oder eingestellt werden.

Ferner können mit unterschiedlichen Auswahlelementen 5 unterschiedliche und/oder eine unterschiedliche Anzahl von Auswahlelementen 5 gekoppelt sein. Die Fig. 1 zeigt, dass einige Auswahlelemente 5 mit allen vier Betätigungselementen 8 gekoppelt sind und auf diese Weise insbesondere vier unterschiedliche Funktionen über die Betätigungselemente 8 für die wenigstens eine über das jeweilige Auswahlelement 5 ausgewählte Maschinenkomponente 6 ansteuerbar sind. Für weitere Auswahlelemente 5 kann eine Kopplung auch nur mit zwei Betätigungselementen 8 vorgesehen sein, so dass zwei Funktionen ansteuerbar sind. Welche Betätigungselemente 8 mit den Auswahlelementen 5 gekoppelt sind, kann für unterschiedliche Ausführungsformen variiert werden.

Die Fig. 6 zeigt schematisch, dass die Betätigungselemente 8 in Abhängigkeit des jeweils ausgewählten Auswahlelementes 5 unterschiedliche Funktionen unterschiedlicher Maschinenkomponenten 6 steuern können. Die Art der Durchführung der Funktion kann dabei von der jeweils angesteuerten Maschinenkomponente 6 abhängen. Insbesondere können Bewegungsfunktionen, die zu einer Positionsveränderung der Maschinenkomponente 6 führen, durchgeführt werden. Dabei kann ein Förderband angehoben oder abgesenkt werden, die Position eines Gegenkamms der Zerkleinerungsanlage geändert werden, etc. Die Funktionen können für unterschiedliche Anlagen 2 variieren und insbesondere anhand der in der Praxis benötigten Einstellung vorgegeben werden.

Nicht näher im Detail dargestellt ist, dass eine Funktion der wenigstens einen Maschinenkomponente 6 eine veränderte Anordnung und/oder Positionierung der Maschinenkomponente 6 in der Anlage 2 und/oder eine veränderte Betriebsweise, insbesondere wenigstens eines veränderten Betriebsparameters, der wenigstens einen Maschinenkomponente 6 bedingt.

Fig. 2 zeigt, dass die Bedieneinrichtung 3, insbesondere die Steuerungsvorrichtung 1, an der Anlage 2, nämlich an einer Gehäuseoberfläche 9 der Anlage 2, angeordnet ist.

Nicht näher dargestellt ist, dass die Bedieneinrichtung 3, insbesondere die Steuerungsvorrichtung 1, benachbart zu der Anlage 2, bevorzugt angeordnet an ein mit der Anlage 2 verbundenes Haltesystem zur Halterung der Steuerungsvorrichtung 1, angeordnet sein kann. Das Haltesystem kann folglich eine mittelbare Anordnung der Bedieneinrichtung 3 an der Anlage 2 ermöglichen.

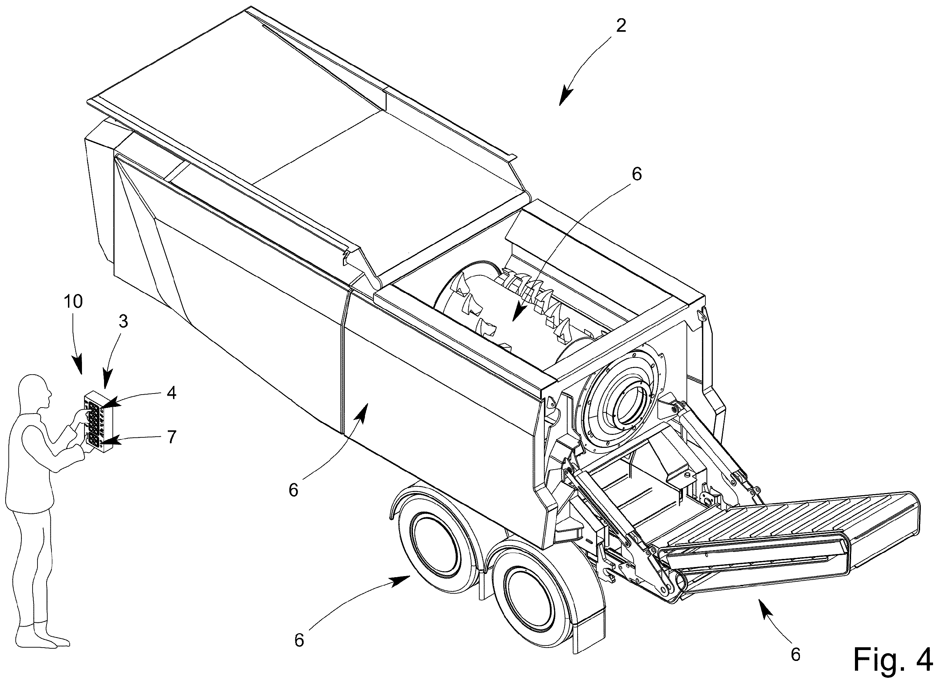

In Fig. 4 ist schematisch dargestellt, dass - bedarfsweise zusätzlich zur Anordnung der Steuerungsvorrichtung 1 an der Anlage 2 - die Bedieneinrichtung 3 als Fernbedienung 10 für die Anlage 2 ausgebildet ist. Insbesondere kann auch die Steuerungsvorrichtung 1 als Fernbedienung 10 ausgebildet sein.

Zudem ist bei der in Fig. 4 gezeigten Ausführungsform vorgesehen, dass die Bedieneinrichtung 3 als von der Anlage 2 räumlich getrennte und mit der Anlage 2, insbesondere kabellos, bevorzugt über eine Funkverbindung, WLAN-Verbindung und/oder Bluetooth-Verbindung, gekoppelte, Einrichtung ausgebildet ist. Die Einrichtung ist in dem in Fig. 4 dargestellten Ausführungsbeispiel eine Fernbedienung 10. In weiteren Ausführungsformen, die nicht näher dargestellt sind, kann die Einrichtung auch als externes Mobilgerät etc. ausgebildet sein.

In den dargestellten Ausführungsformen ist vorgesehen, dass das Bedienfeld 4 und/oder das Unterbedienfeld 7 frei von einem Bedienbildschirm und/oder einem Touchscreen ist und/oder durch physische, manuelle Betätigung des Auswahlelementes 5 bzw. des Betätigungselementes 8, bevorzugt tasterbasiert, betätigbar ist.

Bedarfsweise kann auch über die Art der Betätigung des Betätigungselementes 8 die Durchführung der Funktionen beeinflusst werden. So kann zum Beispiel ein kurzes Drücken des Betätigungselementes 8 eine vorgegebene Funktion auslösen, wohingegen ein längeres Drücken eine schrittweise und/oder kontinuierliche Durchführung der Funktion veranlassen kann. Auch durch andere Betätigungsweisen der Betätigungselemente 8 kann eine Veränderung der Funktionen ausgelöst werden, insbesondere durch eine manuelle Betätigung durch ein Heben, Senken, Drehen, Ziehen etc. des Betätigungselementes 8.

Nicht näher dargestellt ist, dass wenigstens eine Funktion in Abhängigkeit zur Dauer der Betätigung des Betätigungselements 8 in eine rastende Funktionsstellung oder in eine tastende Funktionsstellung überführbar ist, insbesondere wobei die Funktion in der rastenden Funktionsstellung auch nach Beendigung der Betätigung des Betätigungselements 8 aktiviert bleibt und/oder die Funktion in der tastenden Funktionsstellung nach Beendigung der Betätigung des Betätigungselements 8 gestoppt wird, insbesondere wobei ein Betätigungselement 8 in Abhängigkeit der Dauer der Betätigung sowohl in eine rastende als auch in eine tastende Funktionsstellung überführbar ist. Durch die rastende oder die tastende Funktionsstellung kann demnach die Art der Betätigung des Betätigungselementes 8 zur Beeinflussung der Ausführung der Funktion verändert werden.

In dem in Fig. 1 gezeigten Ausführungsbeispiel ist die Gehäuseoberfläche 9 im Bereich des Bedienfeldes 4 und/oder des Unterbedienfeldes 7 und/oder der Bereich des Bedienfeldes 4 und/oder des Unterbedienfeldes 7 frei von einem optischen und elektrischen Anzeigemittel, insbesondere bildschirm- bzw. displayfrei, ausgebildet. Die Betätigung des Bedienfeldes 4 und des Unterbedienfeldes 7 kann somit nicht digital und/oder durch eine manuelle Betätigung erfolgen.

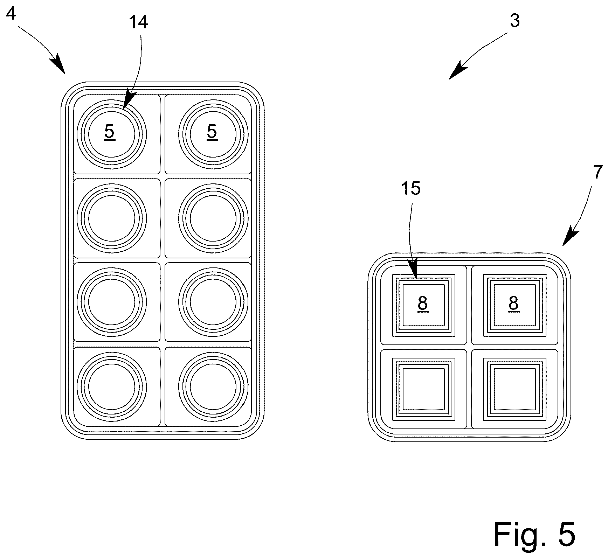

Fig. 5 zeigt, dass das Auswahlelement 5 und/oder das Betätigungselement 8 als Druckknopf und/oder Drucktaster ausgebildet ist. Fig. 1 zeigt, dass das Auswahlelement 5 und das Betätigungselement 8 jeweils als überstehender Taster ausgebildet sind. Nicht näher dargestellt ist, dass in weiteren Ausführungsformen das Auswahlelement 5 und/oder das Betätigungselement 8 als Kippschalter und/oder Steuerungsrad und/oder Steuerhebel, insbesondere Joystick, ausgebildet ist/sind. In Abhängigkeit der Ausbildung des Betätigungselementes 8 und des Auswahlelementes 5 kann auch eine unterschiedliche Betätigung vorgesehen sein, die sich jedoch insbesondere intuitiv für eine Bedienperson ergibt.

Fig. 1 zeigt, dass auf dem Bedienfeld 4 Visualisierungsmittel 11, insbesondere graphische Visualisierungsmittel 11, zur Kennzeichnung der über das jeweilige Auswahlelement 5 auswählbaren wenigstens einen Maschinenkomponente(n) 6 vorgesehen sind. Die Visualisierungsmittel 11 können schematisch die auswählbare(n) Maschinenkomponente(n) 6 referenzieren. Insbesondere sind die Visualisierungsmittel 11 zur Kennzeichnung der Maschinenkomponente 6 dauerhaft und/oder nicht-elektronisch, insbesondere als Markierungen, bevorzugt Symbolmarkierungen und/oder Gravierungen, ausgebildet. Die Fig. 1 zeigt als Piktogramme ausgebildete Visualisierungsmittel 11. Dabei ist einem Auswahlelement 5 ein oder mehrere Visualisierungsmittel 11 zugeordnet, das jeweils wenigstens eine Maschinenkomponente 6 darstellt. Die Darstellung von mehreren Visualisierungsmitteln 11 ist dann sinnvoll, wenn für unterschiedliche, über ein Auswahlelement 5 auswählbare Maschinenkomponenten 6 unterschiedliche Funktionen über die Betätigungselemente 8 ausgewählt werden können, was zum Beispiel das rechte Auswahlelement 5 der zweiten Reihe von oben des Bedienfeldes 4 graphisch über die Visualisierungsmittel 11 in Fig. 1 schematisch darstellt.

Des Weiteren zeigt Fig. 1, dass auf dem Bedienfeld 4 weitere Visualisierungsmittel 12, insbesondere graphische Visualisierungsmittel 12, zur Kennzeichnung der über das jeweilige Betätigungselement 8 auswählbaren Funktion der wenigstens einen Maschinenkomponente(n) 6 vorgesehen sind, insbesondere wobei die weiteren Visualisierungsmittel 12 zur Kennzeichnung der Funktionen dauerhaft und/oder nicht-elektronisch, insbesondere als Markierungen, bevorzugt Symbolmarkierungen und/oder Gravierungen, ausgebildet sind.

Dabei kann das weitere Visualisierungsmittel 12, wie in Fig. 1 schematisch dargestellt ist, dem Visualisierungsmittel 11 zugeordnet sein und insbesondere graphisch, zum Beispiel durch Pfeile, die durchzuführende Funktion veranschaulichen. Wenn mehr als ein Betätigungselement 8 vorgesehen ist, so kann das weitere Visualisierungsmittel 12 auch ein Betätigungselement 8 mit der jeweiligen Funktion verknüpfen. Hierfür können auch neben den Betätigungselementen 8 ergänzende Visualisierungsmittel vorgesehen sein, die den weiteren Visualisierungsmitteln 12 optisch ähneln können oder eine Verknüpfung für die Bedienperson ermöglichen.

Die Fig. 1 zeigt zum Beispiel vier Betätigungselemente 8, die durch unterschiedliche Pfeilausrichtungen (ergänzende Visualisierungsmittel) gekennzeichnet sind. Diese Pfeile werden schematisch auch für die weiteren Visualisierungsmittel 12 genutzt. Zudem kann jeweils ein Paar von Pfeilen einer Maschinenkomponente 6 und somit einem Visualisierungsmittel 11 zugeordnet werden, um die unterschiedlichen auswählbaren Funktionen graphisch darstellen zu können. Bedarfsweise können auch vier Pfeile einer Maschinenkomponente 6 und somit einem Visualisierungsmittel 11 zugeordnet werden, wenn alle vier Betätigungselemente 8 unterschiedliche ansteuerbare Funktionen ermöglichen. Zudem kann auch jeweils ein Paar von Pfeilen einer Maschinenkomponente 6 und somit einem Visualisierungsmittel 11 zugeordnet sein. Wenn zwei Visualisierungsmittel 11 vorgesehen sind, können über zwei Visualisierungsmittel 12 insgesamt vier Pfeile dargestellt werden, die jeweils ein Betätigungselement 8 und eine über dieses Betätigungselement 8 ausführbare Funktion referenzieren können.

Letztlich sind alle Visualisierungsmittel so ausgebildet, dass für die Bedienperson auf einfache Weise angezeigt werden kann, wie über die Bedieneinrichtung 3 unterschiedliche Funktionen für unterschiedliche Maschinenkomponente 6 vorgegeben werden können und insbesondere welche Funktion ausgeführt werden kann. Besonders einfach kann dies über graphische Symbolmarkierungen erfolgen. Es sind jedoch auch andere Referenzen möglich. Jedenfalls wird der Bedienperson in einfacher Weise vermittelt, wie die Bedieneinrichtung 3 und folglich auch die Anlage 2 bedient werden kann.

Insbesondere ist vorgesehen, dass das Unterbedienfeld 7 zumindest abschnittsweise lokal vom Bedienfeld 4 unabhängig und/oder räumlich getrennt, insbesondere benachbart zum Bedienfeld 4, auf einer gemeinsamen Gehäuseoberfläche 9 der Anlage 2 angeordnet ist. Dies ist schematisch in der Fig. 5 gezeigt.

Fig. 1 zeigt, dass, insbesondere auf der Gehäuseoberfläche 9, wenigstens eine Anzeigeeinrichtung 13 der Bedieneinrichtung 3 vorgesehen ist. In dem in Fig. 1 gezeigten Ausführungsbeispiel ist insbesondere vorgesehen, dass die Anzeigeeinrichtung 13 lokal entkoppelt vom Bedienfeld 4 und/oder vom Unterbedienfeld 7 ist und/oder in Abhängigkeit der über das Auswahlelement 5 ausgewählten wenigstens einen Maschinenkomponente 7 eine der über die Betätigungselement(e) 8 auswählbaren und/oder ausgewählten Funktion zugeordnete graphische Funktionsdarstellung auf der Anzeigeneinrichtung 13 erfolgt, die insbesondere die über die Betätigungselement(e) 8 steuerbaren Funktionen graphisch mit dem jeweiligen Betätigungselement 8 verknüpft.

Demnach kann die Anzeigeeinrichtung 13 die Bedienperson ebenfalls bei der Bedienung der Bedieneinrichtung 3 unterstützen und insbesondere ergänzend zu den Visualisierungsmitteln 11, 12 eine graphische Darstellung der jeweils über die Auswahlelemente 5 ausgewählten Maschinenkomponenten 6 sowie der über die Betätigungselemente 8 ansteuerbaren Funktionen gewährleisten.

Fig. 1 - aber auch die Fig. 5 - zeigt, dass ein Signalmittel 14, insbesondere ein Leuchtmittel, dem Auswahlelement 5 derart zugeordnet ist, dass infolge der Auswahl über das Auswahlelement 5 eine, insbesondere optische, Hervorhebung im Bereich des Auswahlelements 5, insbesondere gegenüber den übrigen Auswahlelementen 5, und/oder eine Aktivierung des Signalmittels 14 erfolgt.

Nicht näher dargestellt ist, dass das Signalmittel 14 zur akustischen und/oder taktilen Signalgebung ausgebildet ist.

Bedarfsweise kann auch das Signalmittel 14 verschiedene Zustände einnehmen, um die Bedienung der Bedieneinrichtung 3 zu vereinfachen. Zum Beispiel können verschiedene Farben des Signalmittels 14 unterschiedliche Zustände des Auswahlelementes 5 anzeigen, wie zum Beispiel, ob dieses gerade inaktiv ist, aktiviert worden ist oder nicht mehr aktiviert werden kann, da die dem Auswahlelement 5 zugeordneten Maschinenkomponenten 6 noch eine Funktion aus einer vorherigen Betätigung ausführen. Dies kann durch unterschiedliche Farben (wie weiß, rot und grün oder andere Farben) erfolgen. Auf diese Weise können insbesondere mehrere Signalmittel 14 in unterschiedlichen Zuständen sein.

Insbesondere ist nur ein Auswahlelement 5 in einem aktiven Zustand zur Steuerung der diesem Auswahlelement 5 zugeordneten Maschinenkomponenten 6, wobei in diesem Zustand dieses Auswahlelement 5 zu den Betätigungselementen 8 gekoppelt sein kann. Weitere Auswahlelemente 5 können gleichzeitig in einem inaktiven oder derzeit nicht aktivierbaren Zustand (in dem vorher aktivierte Funktionen noch ausgeführt werden) sein.

Fig. 1 zeigt weiter, dass wenigstens ein weiteres Signalmittel 15, insbesondere ein weiteres Leuchtmittel und/oder insbesondere ausgebildet zur optischen, akustischen und/oder taktilen Signalgebung, dem Unterbedienfeld 7 derart zugeordnet ist, dass infolge der Auswahl über das Auswahlelement 5 wenigstens eine, insbesondere optische, akustische und/oder taktile, Hervorhebung eines Bereiches des Unterbedienfeldes 7 und/oder eine Aktivierung des weiteren Signalmittels 15 erfolgt, vorzugsweise im Bereich des/der Betätigungselements/Betätigungselemente 8 zur Auswahl der Funktion. Über das weitere Signalmittel 15 kann einer Bedienperson auf einfache Weise angezeigt werden, welches Betätigungselement 8 grundsätzlich betätigt werden kann, insbesondere wenn nicht alle Betätigungselemente 8 mit dem ausgewählten Auswahlelement 5 gekoppelt sind und zum Beispiel für dieses Auswahlelement 5 keine Funktion initiieren.

Ferner zeigen die Fig. 2 bis 4 unterschiedliche Ausführungsformen einer Anlage 2 zur Materialbearbeitung und/oder Materialverarbeitung, insbesondere für Recyclinganwendungen, besonders bevorzugt eine Zerkleinerungs- und/oder Separationsanlage, mit einer nach einem der vorgenannten Ausführungsformen ausgebildeten Steuerungsvorrichtung 1.

Die Fig. 2 bis 4 zeigen zudem die Verwendung einer nach einem der vorgenannten Ausführungsformen ausgebildeten Steuerungsvorrichtung 1 in einer Anlage 2 zur Materialbearbeitung und/oder Materialverarbeitung, insbesondere für Recyclinganwendungen, besonders bevorzugt eine Zerkleinerungs- und/oder Separationsanlage.

### Bezugszeichenliste:

- 1: Steuerungsvorrichtung
- 2: Anlage
- 3: Bedieneinrichtung
- 4: Bedienfeld
- 5: Auswahlelement
- 6: Maschinenkomponente
- 7: Unterbedienfeld
- 8: Betätigungselement
- 9: Gehäuseoberfläche von 2
- 10: Fernbedienung
- 11: Visualisierungsmittel
- 12: weitere Visualisierungsmittel
- 13: Anzeigeeinrichtung
- 14: Signalmittel
- 15: weiteres Signalmittel

## Patentansprüche

1. Steuerungsvorrichtung (1) für eine Anlage (2) zur Materialbearbeitung und/oder Materialverarbeitung, insbesondere für Recyclinganwendungen, besonders bevorzugt eine Zerkleinerungs- und/oder Separationsanlage, mit einer Bedieneinrichtung (3), insbesondere zur manuellen Steuerung der Anlage (2),
wobei die Bedieneinrichtung (3) ein Bedienfeld (4) aufweisend wenigstens ein Auswahlelement (5) zur manuellen Auswahl wenigstens einer Maschinenkomponente (6) der Anlage (2) und ein Unterbedienfeld (7) aufweisend wenigstens ein Betätigungselement (8) zur Auswahl und/oder Aktivierung und/oder Einstellung wenigstens einer Funktion der ausgewählten wenigstens einen Maschinenkomponente (6) aufweist,
- wobei das Unterbedienfeld (7) mit dem Bedienfeld (4) derart gekoppelt ist, dass das wenigstens eine Betätigungselement (8) jeweils mit der über das Auswahlelement (5) ausgewählten wenigstens einen Maschinenkomponente (6) gekoppelt ist, insbesondere so dass über das wenigstens eine Betätigungselement (8) je nach ausgewählter wenigstens einer Maschinenkomponente (6) unterschiedliche Funktionen, insbesondere der jeweils ausgewählten wenigstens einen Maschinenkomponente (6), steuerbar sind, und/oder
- wobei in Abhängigkeit der wenigstens einen über das Auswahlelement (5) ausgewählten Maschinenkomponente (6) das Unterbedienfeld (7) über das wenigstens eine Betätigungselement (8) betätigbar ist, so dass über das wenigstens eine Betätigungselement (8) unterschiedliche ausgewählte Maschinenkomponenten (6) steuerbar sind.

2. Steuerungsvorrichtung nach Anspruch 1, **dadurch gekennzeichnet, dass** das Unterbedienfeld (7) mehrere Betätigungselemente (8) aufweist, die insbesondere derart ausgebildet sind, dass in Abhängigkeit der über das Auswahlelement (5) ausgewählten Maschinenkomponente (6) unterschiedliche Funktionen der ausgewählten Maschinenkomponenten (6) aktiviert, ausgewählt und/oder eingestellt werden.

3. Steuerungsvorrichtung nach Anspruch 1 oder 2, **dadurch gekennzeichnet, dass** eine Funktion der wenigstens einen Maschinenkomponente (6) eine veränderte Anordnung und/oder Positionierung der Maschinenkomponente (6) in der Anlage (2) und/oder eine veränderte Betriebsweise, insbesondere wenigstens einen veränderten Betriebsparameter, der wenigstens einen Maschinenkomponente (6) bedingt.

4. Steuerungsvorrichtung nach einem der vorhergehenden Ansprüche, **dadurch gekennzeichnet, dass** die Bedieneinrichtung (3), insbesondere die Steuerungsvorrichtung (1), an der Anlage (2), insbesondere an einer Gehäuseoberfläche (9) der Anlage (2), und/oder benachbart zu der Anlage (2), bevorzugt angeordnet an ein mit der Anlage (2) verbundenes Haltesystem zur Halterung der Steuerungsvorrichtung (1), angeordnet ist und/oder, bedarfsweise zusätzlich, als Fernbedienung (10) für die Anlage (2) und/oder als von der Anlage (2) räumlich getrennte und mit der Anlage (2), insbesondere kabellos, gekoppelte, bevorzugt über eine Funkverbindung, WLAN-Verbindung und/oder Bluetooth-Verbindung, gekoppelte, Einrichtung ausgebildet ist.

5. Steuerungsvorrichtung nach einem der vorhergehenden Ansprüche, **dadurch gekennzeichnet, dass** das Bedienfeld (4) und/oder das Unterbedienfeld (7) frei von einem Bedienbildschirm und/oder einem Touchscreen ist und/oder durch physische, manuelle Betätigung des Auswahlelementes (5) bzw. des Betätigungselementes (8), bevorzugt tasterbasiert, betätigbar ist und/oder
dass die Gehäuseoberfläche (9) im Bereich des Bedienfeldes (4) und/oder des Unterbedienfeldes (7) und/oder der Bereich des Bedienfeldes (4) und/oder des Unterbedienfeldes (7) frei von einem optischen und elektrischen Anzeigemittel, insbesondere bildschirm- bzw. displayfrei, ausgebildet ist/sind.

6. Steuerungsvorrichtung nach einem der vorhergehenden Ansprüche, **dadurch gekennzeichnet, dass** das Auswahlelement (5) und/oder das Betätigungselement (8) als überstehender Taster und/oder Druckknopf und/oder Drucktaster und/oder Kippschalter und/oder Steuerungsrad und/oder Steuerhebel, insbesondere Joystick, ausgebildet ist.

7. Steuerungsvorrichtung nach einem der vorhergehenden Ansprüche, **dadurch gekennzeichnet, dass** auf dem Bedienfeld (4) Visualisierungsmittel (11), insbesondere graphische Visualisierungsmittel (11), zur Kennzeichnung der über das jeweilige Auswahlelement auswählbaren wenigstens einen Maschinenkomponente(n) (6) vorgesehen sind, insbesondere wobei die Visualisierungsmittel (11) zur Kennzeichnung der Maschinenkomponente (6) dauerhaft und/oder nicht-elektronisch, insbesondere als Markierungen, bevorzugt Symbolmarkierungen und/oder Gravierungen, ausgebildet sind.

8. Steuerungsvorrichtung nach einem der vorhergehenden Ansprüche, **dadurch gekennzeichnet, dass** auf dem Bedienfeld (4) weitere Visualisierungsmittel (12), insbesondere graphische Visualisierungsmittel (12), zur Kennzeichnung der über das jeweilige Betätigungselement (8) auswählbaren Funktion der wenigstens einen Maschinenkomponente(n) (6) vorgesehen sind, insbesondere wobei die weiteren Visualisierungsmittel (12) zur Kennzeichnung der Funktionen dauerhaft und/oder nicht-elektronisch, insbesondere als Markierungen, bevorzugt Symbolmarkierungen und/oder Gravierungen, ausgebildet sind.

9. Steuerungsvorrichtung nach einem der vorhergehenden Ansprüche, **dadurch gekennzeichnet, dass** das Unterbedienfeld (7) zumindest abschnittsweise lokal vom Bedienfeld (4) unabhängig und/oder räumlich getrennt, insbesondere benachbart zum Bedienfeld (4), auf einer gemeinsamen Gehäuseoberfläche (9) der Anlage (2) angeordnet ist.

10. Steuerungsvorrichtung nach einem der vorhergehenden Ansprüche, **dadurch gekennzeichnet, dass** wenigstens eine Funktion in Abhängigkeit zur Dauer der Betätigung des Betätigungselements (8) in eine rastende Funktionsstellung oder in eine tastende Funktionsstellung überführbar ist, insbesondere wobei die Funktion in der rastenden Funktionsstellung auch nach Beendigung der Betätigung des Betätigungselements (8) aktiviert bleibt und/oder die Funktion in der tastenden Funktionsstellung nach Beendigung der Betätigung des Betätigungselements (8) gestoppt wird, insbesondere wobei ein Betätigungselement (8) in Abhängigkeit der Dauer der Betätigung sowohl in eine rastende als auch in eine tastende Funktionsstellung überführbar ist.

11. Steuerungsvorrichtung nach einem der vorhergehenden Ansprüche, **dadurch gekennzeichnet, dass**, insbesondere auf der Gehäuseoberfläche (9), wenigstens eine Anzeigeeinrichtung (13) der Bedieneinrichtung (3) vorgesehen ist, insbesondere wobei die Anzeigeeinrichtung (13) lokal entkoppelt vom Bedienfeld (4) und/oder vom Unterbedienfeld (7) ist und/oder insbesondere wobei in Abhängigkeit der über das Auswahlelement (5) ausgewählten wenigstens einen Maschinenkomponente (7) eine der über das/die Betätigungselement(e) (8) auswählbaren und/oder ausgewählten Funktion zugeordnete graphische Funktionsdarstellung auf der Anzeigeeinrichtung (13) erfolgt, die insbesondere die über die Betätigungselement(e) (8) steuerbaren Funktionen graphisch mit dem jeweiligen Betätigungselement (8) verknüpft.

12. Steuerungsvorrichtung nach einem der vorhergehenden Ansprüche, **dadurch gekennzeichnet, dass** ein Signalmittel (14), insbesondere ein Leuchtmittel und/oder insbesondere ausgebildet zur optischen, akustischen und/oder taktilen Signalgebung, dem Auswahlelement (5) derart zugeordnet ist, dass infolge der Auswahl über das Auswahlelement (5) eine, insbesondere optische, akustische und/oder taktile, Hervorhebung im Bereich des Auswahlelements (5), insbesondere gegenüber den übrigen Auswahlelementen (5), und/oder eine Aktivierung des Signalmittels (14) erfolgt.

13. Steuerungsvorrichtung nach einem der vorhergehenden Ansprüche, **dadurch gekennzeichnet, dass** wenigstens ein weiteres Signalmittel (15), insbesondere ein weiteres Leuchtmittel und/oder insbesondere ausgebildet zur optischen, akustischen und/oder taktilen Signalgebung, dem Unterbedienfeld (7) derart zugeordnet ist, dass infolge der Auswahl über das Auswahlelement (5) wenigstens eine, insbesondere optische, akustische und/oder taktile, Hervorhebung eines Bereiches des Unterbedienfeldes (7) und/oder eine Aktivierung des weiteren Signalmittels (15) erfolgt, vorzugsweise im Bereich des/der Betätigungselements/Betätigungselemente (8) zur Auswahl der Funktion.

14. Anlage (2) zur Materialbearbeitung und/oder Materialverarbeitung, insbesondere für Recyclinganwendungen, besonders bevorzugt eine Zerkleinerungs- und/oder Separationsanlage, mit einer nach einem der vorangehenden Ansprüche 1 bis 13 ausgebildeten Steuerungsvorrichtung (1).

15. Verwendung einer nach einem der vorangehenden Ansprüche 1 bis 13 ausgebildeten Steuerungsvorrichtung (1) in einer Anlage (2) zur Materialbearbeitung und/oder Materialverarbeitung, insbesondere für Recyclinganwendungen, besonders bevorzugt eine Zerkleinerungs- und/oder Separationsanlage.
